# EUROPEAN PATENT APPLICATION

(11) **EP 1 033 716 A1**
(43) Date of publication of application: **06.09.2000**
(21) Application number: 99935100.0
(22) Date of filing: 06.08.1999
(51) Int. Cl.: G11B 23/033, G11B 23/50

(54) **DISK CARTRIDGE**

(30) Priority: 24.08.1998 JP 23773098; 24.08.1998 JP 23773198
(71) Applicant: Sony Corporation, Tokyo 141-0001 (JP)
(72) Inventor: MASUGI, Shinji, Sony Corporation, Tokyo 141-0001 (JP); HIGUCHI, Shintaro, Sony Corporation, Tokyo 141-0001 (JP); MIYATA, Kiyoyuki, Sony Corporation, Tokyo 141-0001 (JP); MEGURO, Hiroshi, Sony Corporation, Tokyo 141-0001 (JP)
(74) Representative: Müller, Frithjof E., Dipl.-Ing.
(86) International application number: JP9904282
(87) International publication number: WO0011673

(57) **Abstract**

A disc cartridge housing a disc, such as a magnetic disc, operating as an information recording medium, includes a main cartridge body unit for rotationally housing a disc having a clamp at its center portion for clamping the disc cartridge to a rotating driving unit. In the main cartridge body unit, there is formed a recording/reproducing aperture for exposing a portion of the signal recording region of the disc to outside across the radial direction of the disc. The lower surface of the main cartridge body unit is provided with a center opening for exposing the clamp mounted on the disc to outside. On each opposite inner surface of the main cartridge body unit is arranged a liner. The liner has an adhesive portion and a non-adhesive portion for the main cartridge body unit. On the surface of the non-adhesive portion facing the inner surface of the main cartridge body unit is formed a non-air-permeable layer. The non-adhesive portion of the liner is floated towards the disc into contact with the disc to clean the disc by an air stream generated on rotationally driving the disc within the main cartridge body unit.

## Description

### Technical Field

This invention relates to a disc cartridge housing a disc-shaped recording medium, such as a magnetic disc, having a center core at the center thereof for clamping to a rotating driving unit. More particularly, it relates to a disc cartridge having a main body unit of a cartridge housing a disc-shaped recording medium and the inner surface of which is provided with a liner for protecting a disc-shaped recording medium.

### Background Art

Up to now, a disc cartridge has been used, which is provided with a main cartridge body unit, obtained on abutting and connecting a pair of upper and lower cartridge halves to each other, and in which a magnetic disc having a flexible disc substrate and a magnetic layer formed thereon is rotationally mounted in the main cartridge body unit.

In this disc cartridge, there is provided a liner, constituted by a non-woven cloth, on the inner surface of each of the upper and lower cartridge halves, constituting the main cartridge body unit, for cleaning the magnetic disc housed within the main cartridge body unit and for protecting the magnetic disc. The liner, provided on the inner surface of the upper cartridge half, has its portion lifted towards the side of the magnetic disc by plural ribs formed like comb-teeth on the inner surface of the upper cartridge half The liner, mounted on the inner surface of the lower cartridge half, has its portion lifted towards the side of a magnetic disc by plural ribs formed in a comprising:-teeth-like pattern on the inner surface of the upper cartridge half. The liner mounted on the inner surface of the lower cartridge half has its portion lifted towards the magnetic disc by a lifter comprised of a thin spring plate mounted on the inner surface of the lower cartridge half for facing the ribs provided on the upper cartridge half. That is, the liners provided on the inner surfaces of the upper and lower cartridge halves are partially swollen out by the ribs and the lifters in direction towards each other, with the swollen-out portions contacting with the signal recording surface of the magnetic disc.

With the above-described disc cartridge, if the magnetic disc, housed within the main cartridge body unit loaded in position on the disc recording/reproducing apparatus, is clamped by a disc rotating driving unit provided on the disc recording and/or reproducing apparatus and thereby run in rotation, the swollen-out portions of the liners are contacted with the rotating magnetic disc to remove dust and dirt attached tot the magnetic disc.

The broad area portion, other than the swollen-out portion, of the liner is adapted to be prevented from damages due to direct contact with the inner surface of the main cartridge body unit of increased toughness.

Meanwhile, in a disc cartridge in which the liners are positively contacted with the magnetic disc to remove dust and dirt attached to the magnetic disc, the dust and dirt detached from the magnetic disc are entangled by and become attached to the liner. If the magnetic disc is run in rotation in this state, the magnetic disc tends to be damaged by the dust and dirt attached to the liner.

In the above-described disc cartridge, the liner is partially swollen out by the ribs and the lifter into contact with the magnetic disc at all times. Thus, the load imposed on the magnetic disc on rotationally driving the magnetic disc is increased. In the disc recording/reproducing apparatus, employing this disc cartridge, a driving motor of the disc rotating driving unit needs to be of an increased size to generate a large driving torque in order to assure stable rotation of the magnetic disc.

Also, if, in the above-described disc cartridge, the upper cartridge half of the main cartridge body unit is deformed, such as with warping, there is produced a state in which the liners are brought into contact with the magnetic disc with a larger force by the ribs and the lifters, thus further increasing the load at the time of rotationally driving the magnetic disc. If the load on the magnetic disc is increased, the driving torque is also increased to increase the load applied to the driving motor of the disc rotating driving unit to render stable rotation of the magnetic disc impossible.

Meanwhile, the magnetic disc, having the increased recording capacity, is increased in its rotational speed. For example, in a magnetic disc 3.5 inches in diameter, having a recording capacity of not less than 200 MBytes, is run in rotation at an rpm not less than 3000. If the rotational speed of the magnetic disc is increased, the force of friction between the magnetic disc and the liners contacting therewith is increased to damage the signal recording surface of the magnetic disc. For rotating the magnetic disc at an elevated speed, the rotational speed of the driving motor of the disc rotating driving unit needs to be raised. If the rotational speed of the driving motor is increased, the driving torque is decreased, such that, if the load applied to the magnetic disc is increased even to the slightest extent, the driving motor cannot be run in rotation in stability to render impossible the rotation of the magnetic disc at a pre-set rotational speed. Thus, there arises the risk that information signals cannot be recorded/reproduced with optimum recording/reproducing characteristics for the magnetic disc.

### Disclosure of the Invention

It is therefore an object of the present invention to provide a disc cartridge that can be rotated in stability as it protects the disc-shaped recording medium housed in the main cartridge body unit.

It is another object of the present invention to provide a disc cartridge that is able to remove dust and dirt produced on the main cartridge body unit housing the disc-shaped recording medium, and that assures reliable protection the disc-shaped recording medium, as the disc-shaped recording medium is rotated at an elevated speed.

It is yet another object of the present invention to provide a disc cartridge that is able to run the disc-shaped recording medium in stability without imparting excess load on the driving motor constituting the disc rotating driving unit.

The disc cartridge according to the present invention, proposed for accomplishing the above object, includes a main cartridge body unit formed on abutting and interconnecting upper and lower cartridge halves for rotationally housing a disc-shaped recording medium having a clamp at its center for clamping the rotating driving unit. On at least the lower surface of the main cartridge body unit is formed a recording/reproducing aperture for exposing a portion of the signal recording region of the disc-shaped recording medium to outside across the radial direction. At the center on the lower surface of the main cartridge body unit is formed a center opening for exposing the clamp mounted on the disc-shaped recording medium to outside. On each opposite inner surface of the main cartridge body unit is mounted a liner. This liner has an adhesive portion and a non-adhesive portion for the main cartridge body unit. On the surface of the non-adhesive portion facing the inner surface of the main cartridge body unit is formed a non-air-permeable layer. By an air stream generated on rotationally driving the disc-shaped recording medium in the main cartridge body unit, the non-adhesive portion of the liner is floated towards the disc-shaped recording medium into contact with and sweeps the disc-shaped recording medium.

The non-adhesive portion of the liner is positioned in an upstream side region with respect to the recording/reproducing aperture looking along the direction of rotation of the disc-shaped recording medium in the main cartridge body unit. By the non-adhesive portion being positioned in this position, the liner is floated along the direction of rotation of the disc-shaped recording medium when the disc-shaped recording medium is floated as it is run in rotation.

The liner used is made up of an air-permeable main liner member, formed by a non-woven clot, and a non-air-permeable layer formed on the entire surface of the main liner member facing the inner surface of the main cartridge body unit.

The non-air-permeable layer is formed by coating a high molecular material on a surface of the main liner member facing the inner surface of the main cartridge body unit. The high molecular material used exhibits thermal sensitivity.

By forming a bend on the liner at or near the boundary between the adhesive portion and the non-adhesive portion, the non-adhesive portion can be approached towards and reliably contacted with the disc-shaped recording medium.

In the disc cartridge according to the present invention, a liner having a non-air-permeable thermally sensitive adhesive layer on its one surface is provided on the facing inner surfaces of the main cartridge body unit for sandwiching the disc-shaped recording medium. Each of the liners has an adhesive portion, having a thermally sensitive adhesive layer banded to the inner surface of the main cartridge body unit, and a non-adhesive portion that can be separated from the inner surface of the main cartridge body unit. At least a portion of the inner surface of the main cartridge body unit facing the non-adhesive portion is formed as a roughed surface. By the inner surface of the main cartridge body unit facing the non-adhesive portion being formed as the roughed surface, the non-adhesive portion is prevented from being affixed to the inner surface of the main cartridge body unit so that the non-adhesive portion is separated from the inner surface of the main cartridge body unit to assure reliable contact thereof with the disc-shaped recording medium.

The roughed surface, thus formed on the inner surface of the main cartridge body unit, has a mean roughness of 5 to 20 µmRz.

The non-adhesive portion of the liner is located in an upstream side area with respect to the recording/reproducing aperture looking in the direction of rotation of the disc-shaped recording medium in the main cartridge body unit.

The liner is formed with a bend facing the planar portion of the main cartridge body unit at or near the boundary between the adhesive portion and the non-adhesive portion with respect to the main cartridge body unit. This bend is formed by being pressed by a lug formed in a thermal welding hone used for bonding the liner to the inner surface of the main cartridge body unit.

Other objects and advantages of the present invention will become apparent from the following explanation of the preferred embodiments of the invention.

### Brief Description of the Drawings

Fig. 1 is a perspective view of a disc cartridge according to the present invention, looking from its upper surface side.
Fig.2 is a perspective view of the disc cartridge looking from its lower surface side.
Fig.3 is an exploded perspective view of the disc cartridge.
Fig.4 is a cross-sectional view showing a magnetic disc housed in the disc cartridge according to the present invention.
Fig.5 is a plan view showing the inner surface of the upper cartridge half of the disc cartridge according to the present invention
Fig.6. is a plan view showing the inner surface of the lower cartridge half of the disc cartridge according to the present invention.
Fig.7 is a cross-sectional view showing a disc cartridge according to the present invention.
Fig.8 is a perspective view of a disc cartridge according to the present invention showing the state in which an air exhaust port provided in the main cartridge body unit is opened.
Fig.9 is a cross-sectional showing the state in which the disc cartridge according to the present invention is loaded on the disc recording/reproducing apparatus and the magnetic disc is run in rotation.
Fig. 10 is a schematic cross-sectional view showing the state in which a liner provided in the main cartridge body unit is flexed and deformed into contact with the magnetic disc.
Fig. 11 is a cross-sectional view showing the state in which air is permeated through a liner formed by a non-woven cloth.
Fig. 12 is a schematic cross-sectional view showing a liner according to the present invention.
Fig.13 is a cross-sectional view showing the state in which the liner used in the disc cartridge according to the present invention.
Fig.14 is a plan view showing the inner surface of a further embodiment of a liner provided on the upper cartridge half
Fig.15 is a plan view showing the inner surface of a further embodiment of a liner provided on the lower cartridge half
Fig.16 is a plan view showing the inner surface of a further embodiment of a liner provided on the upper cartridge half.
Fig.17 is an exploded perspective view showing the inner surface of a further embodiment of the disc cartridge according to the present invention.
Fig.18 is a plan view showing the inner surface of the further embodiment of the disc cartridge according to the present invention.
Fig.19 is a plan view showing the inner surface of the lower cartridge half of a further embodiment of the disc cartridge according to the present invention.
Fig.20 is a cross-sectional view showing a liner employed in a disc cartridge of a further embodiment of the disc cartridge according to the present invention.
Fig.21 is a plan view showing the inner surface of an upper cartridge half showing a roughed surface formed in the upper cartridge half
Fig.22 is a plan view showing the inner surface of a lower cartridge half showing a roughed surface formed in the lower cartridge half
Fig.23 is a plan view showing the liner bonding testing state.
Fig.24 shows the liner bonding testing state and is a cross-sectional view taken along line XXIV to XXIV of Fig.23.
Fig.25 is a cross-sectional view showing the state of bonding a liner to the inner surface of the lower cartridge half.
Fig.26 is a schematic cross-sectional view showing the state of bonding a liner to the inner surface of the lower cartridge half.
Fig.27 is a cross-sectional view showing the state in which a disc cartridge according to a further embodiment of the present invention is loaded on the disc recording/reproducing apparatus for running the magnetic disc in rotation.
Fig.28 is a cross-sectional view showing the state in which the disc cartridge according to the further embodiment of the invention is mounted on the disc recording/reproducing apparatus and in which the non-bonded portion of the upper cartridge half side liner has become flexed.
Fig.29 is a schematic cross-sectional view showing the state in which a liner arranged in the main cartridge body unit is flexed and deformed into contact with the magnetic disc.
Fig.30 is a cross-sectional view showing the state in which the magnetic disc is run in rotation to cause the non-bonded portion of the lower cartridge half side liner to become flexed into contact with the magnetic disc.

### Best Mode For Carrying Out the Invention

The present invention is hereinafter explained, taking an example of applying the present invention to a disc cartridge housing a magnetic disc as a disc-shaped recording medium.

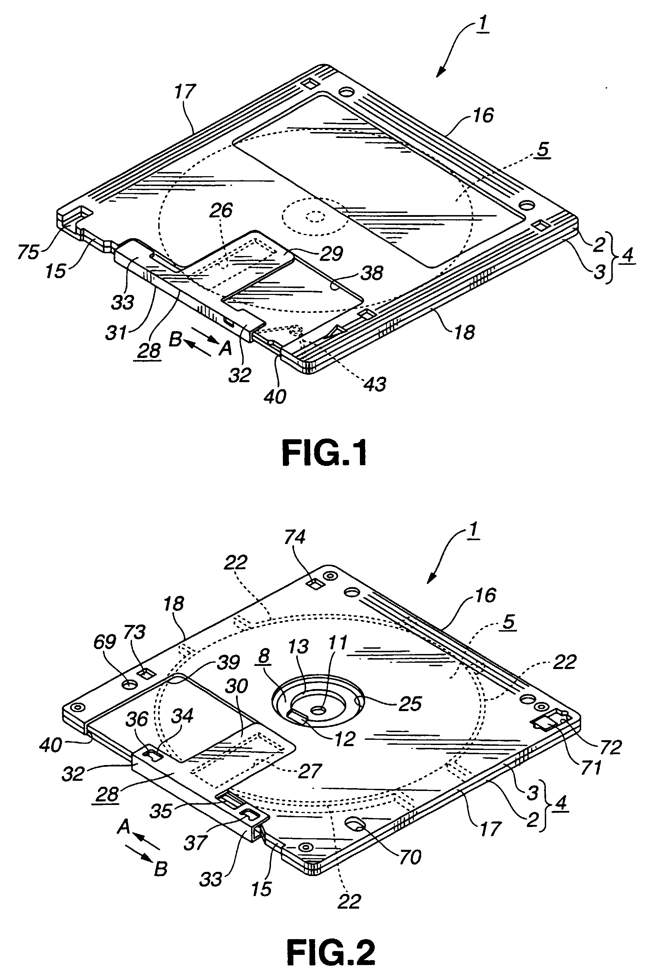

Referring to Figs. 1 to 3, a disc cartridge 1 includes a main cartridge body unit 4, obtained on abutting and interconnecting an upper cartridge half 2 and a lower cartridge half 3, each formed to a subsequently rectangular shape by, for example, injection molding of the upper and lower cartridge halves 2, 3, and a magnetic disc 5, as a recording medium for the information signals, housed within the main cartridge body unit 4.

The upper and lower cartridge halves 2, 3, making up the main cartridge body unit 4, is formed on injection molding a synthetic resin, such as acrylonitrile butyl styrene (ABS) resin.

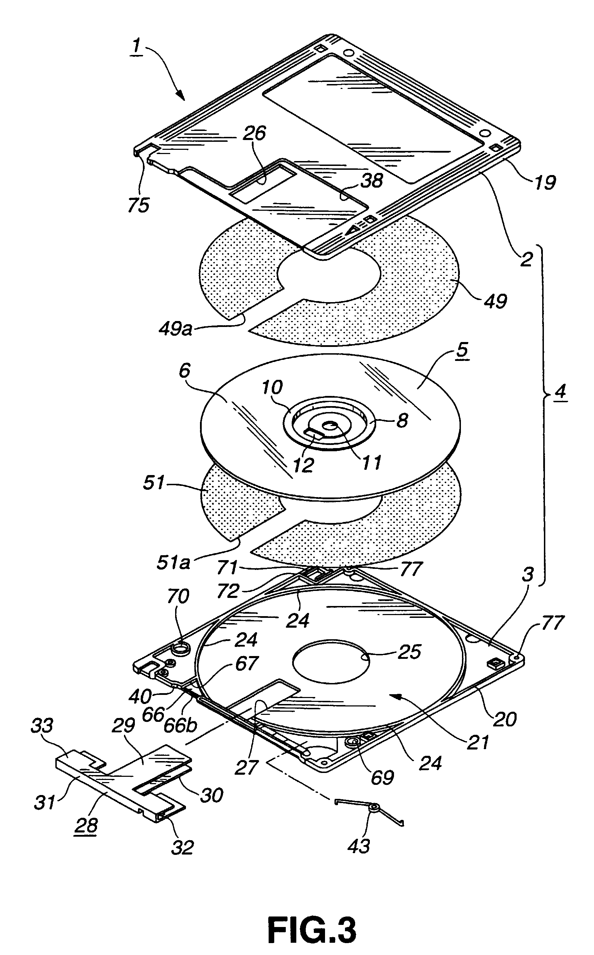

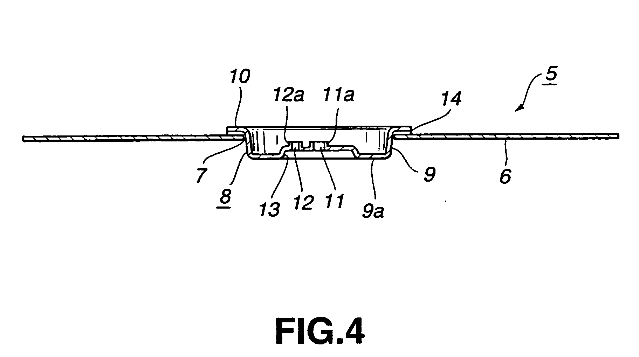

Referring to Fig.3, the magnetic disc 5 housed within the main cartridge body unit 4 includes a main disc member 6, approximately 3.5 inch in diameter, comprised of a thin flexible synthetic resin film having magnetic layers deposited on both surfaces thereof. The center portion of the main disc member 6 has a center opening 7, and a center core 8 mounted on the main disc member 6 as by fitting the center core in the center opening 7, as shown in Fig.4. The center core 8 is formed of a magnetic material, such as metal. When the magnetic disc 5 is loaded on the disc rotating driving unit provided on the recording/reproducing apparatus, the center core 8 is attracted magnetically by a magnet provided on the disc rotating driving unit for clamping the magnetic disc 5 to the rotating driving unit. That is, the center core 8 constitutes a clamping section of the magnetic disc 5 to the disc rotating driving unit.

Referring to Fig.4, the center core 8 has a flat tubular swollen-out portion 9 at its center, and a flange 10 operating as a mounting portion to the main disc member 6 is formed as one with the upper end of the swollen-out portion 9. In a bottom portion 9 of the swollen-out portion 9 are bored a spindle shaft inserting opening 11 engaged by a spindle shaft constituting the disc rotating driving unit and a driving pin engagement opening 12 engaged by a driving pin provided on the disc rotating driving unit. Around the spindle shaft inserting opening 11 and the driving pin engagement opening 12 are formed up standing wall sections 11a, 12a. The up standing wall sections 11a, 12a support the peripheral surfaces of the spindle shaft and the driving pin over broad surfaces to effect reliable engagement of the spindle shaft and the driving pin in the spindle shaft inserting opening 11 and the driving pin engagement opening 12, respectively.

In the bottom 9a of the swollen-out portion 9 is formed a disc setting portion 13 for a disc table of the disc rotating driving unit. The disc setting portion 13 is formed by providing the bottom 9a of the swollen-out portion 9 with a recess to prevent deviation of the loading position of the magnetic disc with respect to the disc table.

The center core 8, constructed as described above, is arranged by fitting the swollen-out portion 9 in the center opening 7 of the main disc member 6 and by setting the flange 10 on one surface of the main disc member 6. The flange 10 is bonded to the main disc member 6 with an adhesive 14 and mounted in this state on the main disc member 6.

The magnetic disc 5, used here, has a recording capacity exceeding 100 MBytes, and is loaded on the disc rotating driving unit so as to be rotated at a rotational speed of 3000 rpm.

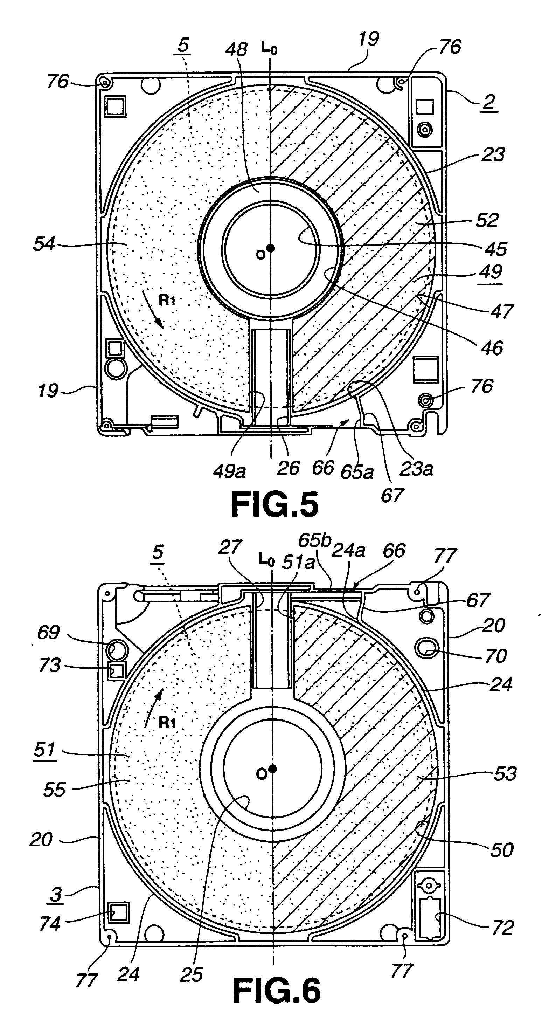

The main cartridge body unit 4, housing the disc 5, constructed by abutting and interconnecting upper and lower cartridge halves 2, 3, formed to a subsequently rectangular shape by injection molding the synthetic resin, as shown in Figs. 1 to 3. On the outer perimeters of the upper and lower cartridge halves 2, 3, constituting the main cartridge body unit 4, upstanding wall sections 19, 20, abutted to one another to constitute a front wall section 15, rear wall section 16 and facing lateral side wall sections 17, 18, as shown in Figs.5 and 6.

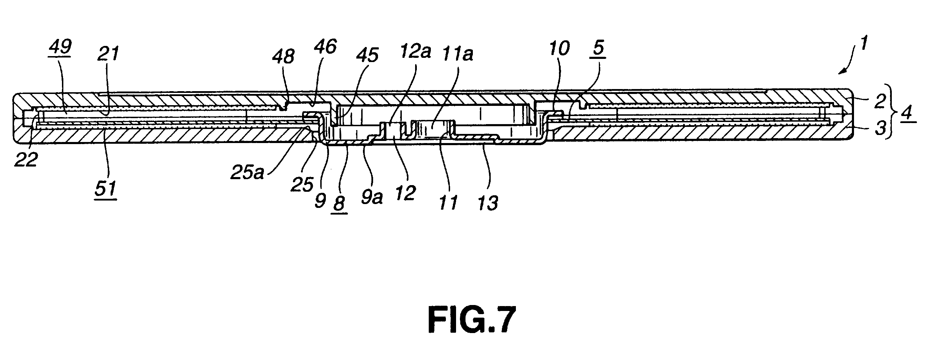

On the facing inner surfaces of the upper and lower cartridge halves 2, 3, there are formed upright partitioning wall forming wall sections 23, 24 for constituting a partitioning wall section 22 delimiting a disc housing section 21 adapted for rotatably housing the magnetic disc 5, as shown in Figs. 5 and 6. These partitioning wall forming wall sections 23, 24 are formed as an arc inscribing the rectangular upper and lower cartridge halves 2, 3, as shown in Figs.5 and 6. The partitioning wall forming wall sections 23, 24 are abutted against each other to constitute the partitioning wall section 22, as shown in Fig.7, with the area surrounded by the partitioning wall section 22 serving as the disc housing section 21. Since the partitioning wall section 22 constituting the disc housing section 21 is formed by abutting the partitioning wall forming wall sections 23, 24, formed arcuately to inscribe the rectangular upper and lower cartridge halves 2, 3, the partitioning wall section 22 encircles substantially the entire periphery of the magnetic disc 5 housed in the disc housing section 21.

At a center portion of the lower cartridge half 3, constituting the lower surface of the main cartridge body unit 4, there is formed a circular center opening 25 for allowing the swollen-out portion 9 of the center core 8 mounted on the magnetic disc 5 housed within the main cartridge body unit 4 to be exposed to outside, as shown in Figs.2 and 3. The center opening 25 is a provided only on the lower cartridge half 3, while the center portion of the upper surface of the main cartridge body unit 2 constituted by the upper cartridge half 2 remains solid, as shown in Figs. 1 and 3.

In the registering portions of the upper cartridge half 2 constituting the upper surface of the main cartridge body unit 4 and the lower cartridge half 3, there are formed a first recording/reproducing aperture 26 and a second recording/reproducing aperture 27 for allowing at least a portion of the signal recording region of the magnetic disc housed in the main cartridge body unit 4 to be exposed to outside across the disc radial direction. These recording/reproducing apertures 26, 27 are formed substantially rectangular in shape and extend from the center portion in the vicinity of the center opening 25 in the left-and-right direction of the main cartridge body unit 4 to the vicinity of the front wall section 15 of the main cartridge body unit 4. The first and second recording/reproducing apertures 26, 27 are formed from the disc housing section 21 to the position proximate to the front wall section 15 so that the magnetic head constituting the recording/reproducing means for information signals, intruded into the inside of the main cartridge body unit 4, will scan the magnetic disc 5 housed in the main cartridge body unit 4 via these openings 26, 27 as far as the outer rim of the magnetic disc 5 housed int the main cartridge body unit 4, as shown in Figs.5 and 6.

On the main cartridge body unit 4, there is movably mounted a shutter member 28 for opening/closing the first and second recording/reproducing apertures 26, 27, as shown in Figs. 1 and 2. The shutter member 28, formed by punching and bending a thin metal sheet, includes a first shutter portion 29 for opening/closing the first recording/reproducing aperture 26 formed in the upper surface of the main cartridge body unit 4, a second shutter portion 30 for opening/closing the second recording/reproducing aperture 27 formed in the lower surface of the main cartridge body unit 4, and a connecting plate 31 for connecting the proximal ends of the first and second shutter portions 29, 30 so that the first and second shutter portions 29, 30 will be approximately parallel to each other, as shown in Fig.3. The connecting plate 31 is formed for being protruded on both sides of the first and second shutter portions 29, 30 for extending along the direction of the front wall section 15 of the main cartridge body unit 4 when the shutter member 28 is mounted on the main cartridge body unit 4. It is on this protruded portion that first and second cartridge holding portions 32, 33 are mounted. These cartridge holding portions 32, 33 are formed in a U-shaped cross-section to have a fit on the front wall section 15 of the main cartridge body unit 4, by forming lugs protruded in the direction of extension of the first and second shutter portions 29, 30 on facing lateral edges of the connecting plate 31 carrying the first and second shutter portions 29, 30, as shown in Figs. 1 and 2. On the lugs of the first and second cartridge holding portions 32, 33, protruded towards the second shutter portion30, there are segmented a pair of engagement pieces 36, 37 engaged in movement guide grooves 34, 35 formed on both sides of the second recording/reproducing aperture 27 for extending along the front wall section 15 in the lower surface side of the main cartridge body unit 4.

Referring to Figs. 1 and 2, the shutter member 28, constructed as described above, is mounted on the main cartridge body unit 4, by inserting the first and second shutter portions 29, 30 onto the main cartridge body unit 4 from the front wall section 15 so that the first and second shutter portions 29, 30 will be extended over the first and second recording/reproducing apertures 26, 27, the first and second cartridge holding portions 32, 33 are fitted on the front wall section 15 of the main cartridge body unit 5 and the paired engagement pieces 36, 37 are engaged in the movement guide grooves 34, 35. The shutter member 28, thus mounted on the main cartridge body unit 4, has the engagement pieces 36, 37 guided by the movement guide grooves 34, 35 and is moved in this manner in the direction indicated by arrows A and B in Figs.1 and 2 between a position in which the first and second shutter portions 29, 30 close the first and second recording/reproducing apertures 26, 27, respectively, and a position in which the first and second shutter portions 29, 30 open the first and second recording/reproducing apertures 26, 27, respectively.

In the upper and lower surfaces of the main cartridge body unit 4, there are formed shutter movement recesses 38, 39 for extending from the rims of the first and second recording/reproducing apertures 26, 27 to the lateral side wall section 18 of the main cartridge body unit 4, as shown in Figs.1 and 2. In the front wall section 15 of the main cartridge body unit 4, there is formed a movement recess 40, corresponding in thickness to the front wall section 15 of the main cartridge body unit 4, for extending along the range of movement of the shutter member 28. The shutter member 28 is mounted substantially flush with the peripheral surface of the main cartridge body unit 4, by having the first and second shutter portions 29, 30 extended within the shutter movement recesses 38, 39 and by having the connecting plate 31 positioned within the movement recess 40.

The shutter member 28 mounted on the main cartridge body unit 4 is biased in the direction indicated by arrow B in Figs. 1 and 2 , that is in the direction of closing the first and second recording/reproducing apertures 26, 27, by a torsion coil spring 43, operating as a biasing member provided within the main cartridge body unit 4. The torsion coil spring 43 is provided at a corner of the main cartridge body unit 4 at which the shutter member 28 is positioned when the shutter member 28 opens the first and second recording/reproducing apertures 26, 27, as shown in Fig.3. The torsion coil spring 43 is arranged within the main cartridge body unit 4 by having its one end retained by the main cartridge body unit 4 and by having its opposite end retained by a spring retainer provided on the first cartridge holding portion 32, for biasing the shutter member 28 in the direction indicated by arrow B in Figs. 1 and 2, that is in the direction of closing the first and second recording/reproducing apertures 26, 27.

At a mid portion on the inner surface of the upper cartridge half 2 constituting the main cartridge body unit 4, there is provided a disc movement limiting rib 45 for limiting the movement of the magnetic disc 5, as shown in Fig.7. This disc movement limiting rib 45 is of a circular shape having an outer diameter that can be introduced into the swollen-out portion 9 of the center core 8 provided on the magnetic disc 5. The disc movement limiting rib 45 is intruded into the swollen-out portion 9, as shown in Fig.7, to restrict movement in the planar direction of the magnetic disc 5. Moreover, the disc movement limiting rib 45 prevents the outer rim of the magnetic disc 5 from being deformed by abutting contact against the partitioning wall section 21 to protect the flexible magnetic disc 5.

The disc movement limiting rib 45 also is abutted against the bottom 9a of the swollen-out portion 9 of the center core 8, when the magnetic disc 5 is moved towards the upper cartridge half 2, to prevent the flange 10 of the center core 8, positioned on the upper surface side of the main disc member 6, from contacting with the inner surface of the upper cartridge half 2, as well as to prevent the upper cartridge half 2 of the synthetic resin from being ground by the center core 8 of metal to produce chips.

On the outer rim of the disc movement limiting rib 45 is formed an annular recess 46 into which is intruded the flange 10 of the center core 8 when the magnetic disc 5 is supported by the disc movement limiting rib 45, as shown in Fig.7. By forming the annular recess 46 in this manner, it is possible to prevent the flange 10 from contacting with the inner surface of the upper cartridge half 2 while the thickness of the main cartridge body unit 4 is reduced in thickness. On the rim of the inner surface of the center opening 25 is formed an inclined surface 25a, as shown in Fig.7. This inclined surface 25a serves for providing clearance for the flange 10 of the center core 8 of an increased thickness.

On the inner surface of the upper cartridge half 2 is protuberantly formed a ring-shaped rib 48 constituting a liner mounting portion 47 along with the partitioning wall section 22 for surrounding the annular recess 46, as shown in Fig.5. An area surrounded by the partitioning wall forming wall section 23 and the rib 48 serves as a liner mounting portion 47 formed to have a planar surface. Within the liner mounting portion 47, there is arranged a liner 49 for cleaning the magnetic disc 5 housed in the main cartridge body unit 4 and for protecting the magnetic disc 5, as shown in Fig.5. This liner 49 is formed as a ring sized to cover the major surface of the main disc member 6 constituting the magnetic disc 5. In a portion of the liner 49 in register with the first recording/reproducing aperture 26 is formed a cut-out 49a for opening the aperture 26, as shown in Figs.3 and 5.

An area surrounded by the partitioning wall forming wall section 24 of the lower cartridge half 3 is constituted by a liner arranging portion 50 having a planar surface. In this liner arranging portion 50 is arranged a liner 51 adapted for cleaning the magnetic disc 5 housed within the main cartridge body unit 4 and for protecting the magnetic disc 5, as shown in Fig.6. This liner 51 is formed as a ring sized to cover the major surface of the main disc member 6 constituting the magnetic disc 5. In a portion of the liner 51 in register with the first recording/reproducing aperture 27 is formed a cut-out 51a for opening the aperture 27, as shown in Figs.3 and 6.

The liners 49, 51, provided on the inner surfaces of the upper and lower cartridge halves 2, 3, are formed with cut-outs 49a, 51a in register with the first and second recording/reproducing apertures 26, 27. Both opposite side ends of the cut-outs 49a, 51a are designed as free ends.

The liners 49, 51, provided on the opposite inner surfaces of the upper and lower cartridge halves 2, 3, have portions thereof as adhesive portions 52, 53 for the liner mounting portions 47, 50, while having other portions thereof as non-adhesive portions 54, 55, as shown in Figs.5 and 6. That is, the liners 49, 51 are arranged in the inside of the main cartridge body unit 4 so that the non-adhesive portions 54, 55 will be able to be isolated and floated from the respective inner surfaces of the upper and lower cartridge halves 2, 3, respectively.

Meanwhile, the liners 49, 51 are arranged on the respective inner surfaces of the upper and lower cartridge halves 2, 3 so that, if the main cartridge body unit 4 is split along a centerline L0 passing through the center O of the main cartridge body unit 4 to bi-sect the first and second recording/reproducing apertures 26, 27 provided in the upper and lower cartridge halves 2, 3, respectively, the non-adhesive portions 54, 55 will be positioned in an upstream side area of the rotating movement of the magnetic disc 5 within the main cartridge body unit 4 towards the first and second recording/reproducing apertures 26, 27 in the direction indicated by arrow R1 in Figs.5 and 6.

That is, the liners 49, 50 are arranged on the respective inner surfaces of the upper and lower cartridge halves 2, 3, so that, when the magnetic disc 5 is rotated in the direction indicated by arrow R1 in Figs.5 and 6 towards the first and second recording/reproducing apertures 26, 27, the non-adhesive portions 54, 55 will be positioned on the upstream side of the main cartridge body unit 4 corresponding to the intruding side of the main cartridge body unit 4 to the magnetic head as recording/reproducing means facing these apertures 26, 27 and so that the adhesive portions 52, 53 will be positioned in the downstream side area of the main cartridge body unit 4 in which the magnetic disc retreats from the magnetic head facing the apertures 26, 27.

It is noted that the liners 49, 51 are bonded to the liner mounting portion 47, 50 over a substantially 180° region on the downstream side, as from the centerline L0 passing through the center O of the main cartridge body unit 4 to bi-sect the first and second recording/reproducing apertures 26, 27, from which the rotationally driven magnetic disc 5 retreats from the magnetic head facing the apertures 26, 27, as the adhesive portions 52, 53, while the substantially 180° region of the upstream side from which the rotating magnetic disc is intruded onto the magnetic head facing the apertures 26, 27, operates as the non-adhesive portions 54, 55.

As described above, the liners 49, 50, arranged on the inner sides of the upper and lower cartridge halves 2, 3, and having sides as the adhesive portions 52, 53 and the opposite sides as the non-adhesive portions 54, 55, are constructed so that portions thereof extending from the rear wall section 16 opposite to the recording/reproducing apertures 26, 27 of the upper and lower cartridge halves 2, 3 as far as the one lateral sides of the first and second recording/reproducing apertures 26, 27 at which the rotationally driven magnetic disc 5 is intruded into the facing relation with respect to the recording/reproducing unit, not shown, operate as the non-adhesive portions 54, 55 that can be separated and floated from the inner surfaces of the upper and lower cartridge halves 2, 3.

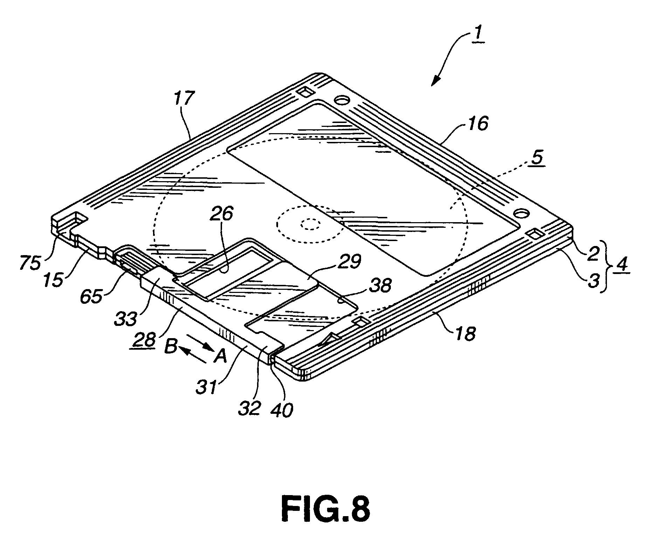

Meanwhile, the disc cartridge 1 of the present invention is formed with an air exhaust opening 65 for exhausting air in the disc housing section 21 as a spacing surrounded by the partitioning wall section 22 to outside the main cartridge body unit 4, and an air exhaust passage 66 communicating with the air exhaust opening 65. Referring to Fig.8, the air exhaust opening 65 is formed by partially segmenting the front wall section 15 of the main cartridge body unit 7. The air exhaust opening 65 is provided at a position in which the opening 65 is closed by a portion of the shutter member 28 when the shutter member 28 is at the position of closing the first and second recording/reproducing apertures 26, 27, as shown in Figs. 1 and 2, and in which the opening 65 is opened when the shutter member 28 is moved to the position of opening the first and second recording/reproducing apertures 26, 27 as shown in Fig.8.

That is, the air exhaust opening 65 is provided at such a position in which, when the shutter member 28 is at the position of closing the first and second recording/reproducing apertures 26, 27, as shown in Figs. 1 and 2, the air exhaust opening 65 is closed by the second cartridge holding portion 33 projected laterally of the first and second recording/reproducing apertures 26, 27, with the air exhaust opening 65 being on the opposite side to the torsion coil spring 43 with the shutter member 28 in-between. The torsion coil spring 43 is adapted to bias the shutter member 28 in a direction of closing the first and second recording/reproducing apertures 26, 27.

The air exhaust opening 65 is formed by forming registering cut-outs 65a, 65b in portions of the upstanding wall sections 19, 20 of the upper and lower cartridge halves 2, 3 constituting the front wall section 15 of the main cartridge body unit 4, and by abutting the upstanding wall sections 19, 20 to each other, as shown in Figs.5 and 6.

Since the air exhaust opening 65 is provided at such a position in which, when the shutter member 28 is at a position of closing the first and second recording/reproducing apertures 26, 27, as shown in Figs. 1 and 2, the air exhaust opening 65 is closed by a portion of the shutter member 28, it is possible to prevent dust and dirt from intruding into the inside of the main cartridge body unit 4 via the air exhaust opening 65.

The air exhaust passage 66, configured for establishing communication between the disc housing section 21 and the air exhaust opening 65 for conducting air from within the disc housing section 21 towards the air exhaust opening 65, is formed by providing cut-outs 23a, 24a in portions of the partitioning wall forming wall sections 23, 24 making up the partitioning wall section 22 delimiting the disc housing section 21, as shown in Figs.5 and 6. These cut-outs 23a, 24a are formed in the portions of the partitioning wall section 22 facing the air exhaust opening 65 of the partitioning wall section 22.

On one side of the air exhaust passage 66 extending from the partitioning wall section 22 to the air exhaust opening 65 is formed an air stream guide wall section 67 adapted to guide air flowing from the disc housing section 21 to the air exhaust opening 65, as shown in Figs.5 and 6.

If the magnetic disc 5, housed in the main cartridge body unit 4, is clamped by the rotating driving unit and run in rotation in the direction indicated by arrow R1 in Figs.5 and 6, there is generated in the disc housing section 21 a spirally-shaped air stream proceeding in the same direction as the rotation of the magnetic disc 5 from the center opening 25 towards the outer periphery, by rotation of the magnetic disc 5.

Thus, the air stream guide wall section 67 is provided on one side of the air exhaust passage 66, facing the air steam, for guiding the air in the disc housing section 21 reliably towards the air exhaust opening 65. By providing the air stream guide wall section 67 in this manner at a position facing the air stream, the air stream flowing spirally from the center portion towards the periphery of the disc housing section 21 slides against the air stream guide wall section 67 towards the air exhaust opening 65 via which it is exhausted to outside the main cartridge body unit 4.

Since the air in the disc housing section 21 is exhausted outwardly from the main cartridge body unit 4 with rotation of the magnetic disc 5, dust and dirt intruded into the disc housing section 21 can be discharged outwardly from the main cartridge body unit 4 along with air exhausted from the main cartridge body unit 4.

As shown in Fig. 2, in the lower surface of the main cartridge body unit 4, constituting the disc cartridge 1 according to the present invention, there are bored first and second positioning reference holes 69, 70 in which are engaged positioning pins on the disc recording/reproducing apparatus designed to set the loading position of the disc cartridge 1. These positioning reference holes 69, 70 are provided in the lower surface of the main cartridge body unit 4 towards the front wall section 15 on both sides of a line of movement of the shutter member 28. The first reference positioning hole 69 is circular in shape to mate with the positioning pin of the circular cross-section, while the second reference positioning hole 70 is formed as an elongated hole having the direction of movement of the shutter member 28 as its long axis direction to permit correction of the engagement position of the positioning pin in the second reference positioning hole 70.

At a corner towards the rear wall section 16 in the lower surface of the main cartridge body unit 4, there is movably provided a mistaken recording inhibiting member 71, as shown in Fig.2. This mistaken recording inhibiting member 71 opens or closes a mistaken recording inhibiting opening 72 bored in the main cartridge body unit 4 to select the state enabling recording of information signals on the magnetic disc 5 or the state inhibiting recording of information signals.

In the vicinity of the first reference positioning hole 69 and the opposite side corner towards the rear wall section 16, there are bored, in the lower surface of the main cartridge body unit 4, first and second recording capacity discriminating openings 73, 74 indicating the recording capacity of the magnetic disc 5 housed in the disc cartridge 1.

At the opposite side corner of the upper surface towards the front wall section 15 of the main cartridge body unit 4, there is provided a loading limiting portion 75 for inhibiting loading of the disc cartridge housing a magnetic disc having a recording capacity different from the recording capacity of the magnetic disc 5 of the disc cartridge according to the present invention. The loading limiting portion 75 is formed as a recess formed in the front wall section 15 of the main cartridge body unit 4.

At the corners of the upper surface towards the front wall section 15 of the main cartridge body unit 4, there are formed welding protrusions 76, 77 abutted to and engaged with each other, as shown in Figs.5 and 6. The upper and lower cartridge halves 2, 3 constitute the main cartridge body unit 4 by abutting the welding protrusions 76, 77 and the upstanding wall sections 19, 20 and welding the welding protrusions 76, 77 and the upstanding wall sections 19, 20, thus abutted together, using e.g., ultrasonic waves.

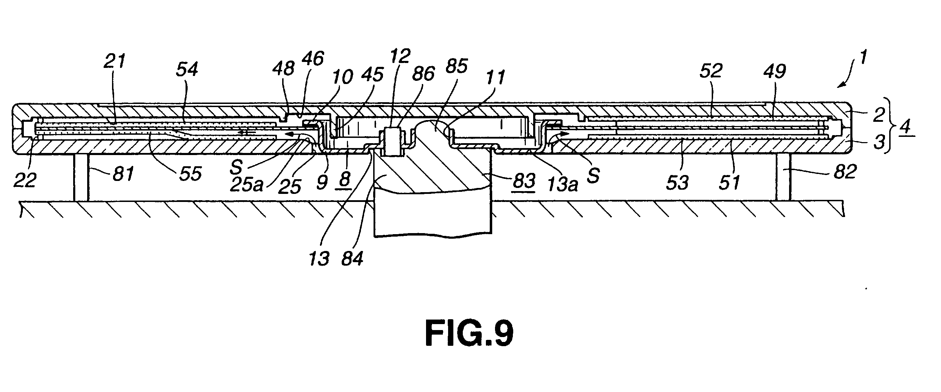

When the above-described disc cartridge 1 is loaded on the disc recording/reproducing apparatus, employing this disc cartridge 1 as a recording medium, the first and second positioning reference holes 69, 70 are engaged by positioning pins 81, 82 provided on the disc recording/reproducing apparatus for setting the position in the horizontal direction, as shown in Fig.9. Moreover, the disc cartridge 1 has its loading height position set by the corner portions towards the rear wall section 16 of the main cartridge body unit 4 being supported by height setting pins, not shown.

When the disc cartridge 1 is loaded on the disc recording/reproducing apparatus, the center core 8 facing the center opening 25 formed in the lower surface of the main cartridge body unit 4 is set on a disc table 84 constituting a disc rotating driving unit 83 provided on the disc recording/reproducing apparatus, while a spindle shaft 85 on the disc recording/reproducing apparatus 83 is passed through the spindle shaft inserting opening 11 and the driving pin 16 is passed through the driving pin engagement opening 12. At this time, the center core 8 is set on a disc table 84 so that the disc setting portion 13 provided on the bottom 9a of the swollen-out portion 9 will be fitted to the disc table 84. Simultaneously, the center core 8 is attracted by a magnet, not shown, provided on the disc table 84, so that the magnetic disc 5 can be rotated in unison with the disc table 84. Since the magnetic disc 5 is set on the disc table 84 via recessed disc setting portion 13 formed in the center core 8, the spindle shaft 85 can be easily passed through the spindle shaft inserting opening 11 as the magnetic disc 5 is prohibited from being offset relative to the disc table 84. In addition, the magnetic disc can be restricted as to offset in its loading position on the disc table 84 so that a driving pin 86 will be introduced into the driving pin engagement opening 12.

If a spindle motor, not shown, constituting the disc rotating driving unit 83, is driven, as the magnetic disc is enabled to be rotated in unison with the disc table 84, the magnetic disc 5 is run in rotation in unison with the rotation of the disc table 84 about the spindle shaft 85 as a center of rotation.

Meanwhile, if the disc cartridge 1 is loaded on the disc recording/reproducing apparatus, as the disc cartridge 1 is positioned in both the horizontal direction and height-wise direction, the spindle shaft 85 is inserted into the spindle shaft inserting opening 11, the driving pin 86 is engaged in the driving pin engagement opening 12and the magnetic disc 5 is set on the disc table 84 in a state in which the magnetic disc 5 can be rotated in unison with the disc table 84, the magnetic disc 5 is floated from the lower cartridge half 3 constituting the main cartridge body unit 4 and is positioned at a mid position along the thickness of the main cartridge body unit 4.

Meanwhile, when the disc cartridge 1 is loaded on the disc recording/reproducing apparatus, the shutter member 28 is moved by a shutter opening mechanism provided on the disc recording/reproducing apparatus, in the direction indicated by arrow A in Figs. 1 and 2, against the bias of the torsion coil spring 43, to open the first and second recording/reproducing apertures 26, 27. This also opens the air exhaust opening 65 provided in the front wall section 15 of the main cartridge body unit 4 as shown in Fig.8.

It is noted that the magnetic disc 5, loaded in position on the disc rotating driving unit 73, is run in rotation at at least 3000 rpm. The magnetic disc 5 of the preferred embodiment is run in rotation in a rpm range from 3000 to 3600. If the magnetic disc 5 is run in rotation at an elevated speed of 3000 to 3600 rpm, there is produced a spiral air stream in the disc housing section 21 along the rotating direction of the magnetic disc 5. This air stream, which is spiral and proceeds from the center of the main cartridge body unit 4 towards its outer periphery, operates to attract air from the center opening 25 formed in the lower surface of the main cartridge body unit 4 in a direction indicated by arrow S in Fig.9. If air is attracted from the center opening 25, there is produced a spiral air stream R2 which sets a pressurized state in a region between the magnetic disc 5 and the lower cartridge half 3 constituting the lower surface of the main cartridge body unit 4.

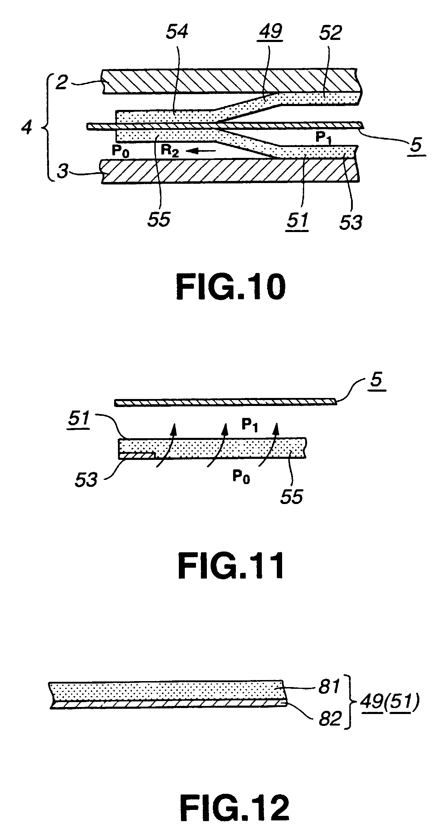

Meanwhile, the liners 49, 51, arranged in the disc cartridge; 1 according to the present invention, can be separated from the inner surfaces of the upper and lower cartridge halves 2, 3, since the portions of the liners 49, 51 extending from the rear wall section 16 of the main cartridge body unit 4 opposite to the recording/reproducing apertures 26, 27 of the upper and lower cartridge halves 2, 3 as far as the sides of the first and second recording/reproducing apertures 26, 27, in which is exposed the rotationally driven magnetic disc 5, are designed as the non-adhesive portions 54, 55. If now the magnetic disc is run in rotation, air sucked from the center opening 25 provided in the main cartridge body unit 4 flows into the spacing between the inner surface of the lower cartridge half 3 and the non-adhesive portion 55 of the liner 51 to generate a spiral air stream R2 such that the pressure P0 between the inner surface of the lower cartridge half 3 and the non-adhesive portion 55 of the liner 51 becomes higher than the pressure P1 between the liner 51 and the magnetic disc 5. By this pressure differential, the non-adhesive portion 55 of the liner 51 is flexed into contact with the magnetic disc 5, as shown in Fig.10.

By the floating of the non-adhesive portion 55 of the liner 51 provided on the lower cartridge half 3, the pressure P1 between the liner 51 of the lower cartridge half 3 and the magnetic disc 5 is increased, so that the magnetic disc 5 is rotated under the force lifting the disc towards the upper cartridge half 2. On the other hand, since the non-adhesive portion 54 of the liner 49 arranged on the upper cartridge half 2 is flexed under its own weight towards the magnetic disc 5, the non-adhesive portion 54 is contacted with the magnetic disc 5, which is rotated under the force lifting it towards the upper cartridge half 2 as shown in Fig.10.

Thus, with the disc cartridge 1 according to the present invention, the liners 49, 51 are partially contacted with the major surfaces of the magnetic disc 5, thus enabling cleaning of the magnetic disc 5. Since the liners 49, 51 are contacted with the magnetic disc by means other than pressurizing means, as in the case of the conventional disc cartridge, there is no risk of the pressure obstructing rotation of the magnetic disc 5 nor the risk of grazing the magnetic disc 5.

By the magnetic disc being run in rotation, the air sucked into the main cartridge body unit 4 is exhausted via the air exhaust opening 65 as an air stream. At this time, the dust and dirt generated from the magnetic disc 5 are also exhausted via the air exhaust opening 65 and prevented from being left in the main cartridge body unit 4, thus positively preventing damage to the magnetic disc 5 and the magnetic head.

Meanwhile, the liners used in the disc cartridge are provided for preventing the magnetic disc housed in the main cartridge body unit from being damaged by direct contact with the inner surface of the main cartridge body unit formed of a highly rigid synthetic resin, so that these liners are formed of a material which cannot damage the magnetic disc on contact with the magnetic disc. Therefore, the liners are usually formed of a flexible non-woven cloth, mainly composed of fibers, exemplified by cellulose, such as rayon (trade name). This type of the non-woven cloth is air permeable since it is an ensemble of fibers.

If the air-permeable non-woven cloth is directly used as the liners 49, 51 of the disc cartridge 1 according to the present invention, the air flowing into the space between the inner surface of the lower cartridge half 3 and the non-adhesive portion 55 of the liner 51 provided on the lower cartridge half 3 flows through the non-adhesive portion 55 of the liner 51 provided on the lower cartridge half 3, as indicated by arrow in Fig.11, so that a sufficient difference between the pressure P0 between the inner surface of the lower cartridge half 3 and the non-adhesive portion 55 of the liner 51 cannot be produced, such that the non-adhesive portion 55 cannot be flexed into contact with the rotationally driven magnetic disc 5.

Thus, the liner 49,51 used in the disc cartridge 1 of the present invention includes a main liner member 81, formed by a non-woven cloth mainly composed of fibers, such as cellulose, e.g., rayon (trade name), and a non-air-permeable layer 82 arranged on one surface of the main liner member 81, as shown in Fig.12. This non-air-permeable layer 82 is formed by coating a high molecular material, such as ethylene vinyl acetate or polyethylene terephthalate (PET), on one surface of the main liner member 81. On the other hand, the non-air-permeable layer 82 is formed by layering a non-air-permeable film of a high molecular material on one surface of the main liner member 81. The non-air-permeable film of a high molecular material may be exemplified by a film of polyethylene terephthalate (PET) or polyamide.

The liner 49, 51, obtained on coating or layering the non-air-permeable layer 82 on a surface of the main liner member 81, is arranged with the main liner member 81 facing the magnetic disc 5 or with the non-air-permeable layer 82 facing the inner surfaces of the upper and lower cartridge halves 2, 3. The liners 49, 51 are bonded to the inner surfaces of the upper and lower cartridge halves 2, 3 using an adhesive.

For facilitating adhesion of the liners 49, 51 to the upper and lower cartridge halves 2, 3, the non-air-permeable layer 82 is preferably formed of a high molecular material exhibiting thermal adhesion characteristics. The high molecular material exhibiting thermal adhesion characteristics may be exemplified by phenolic or epoxy resins. When bonding the liners 49, 51 to the upper and lower cartridge halves 2, 3, it is desirable to use a high molecular material which becomes cured at a temperature lower than the melting point of the material of the main liner member 81 to be bonded to the upper and lower cartridge halves 2, 3.

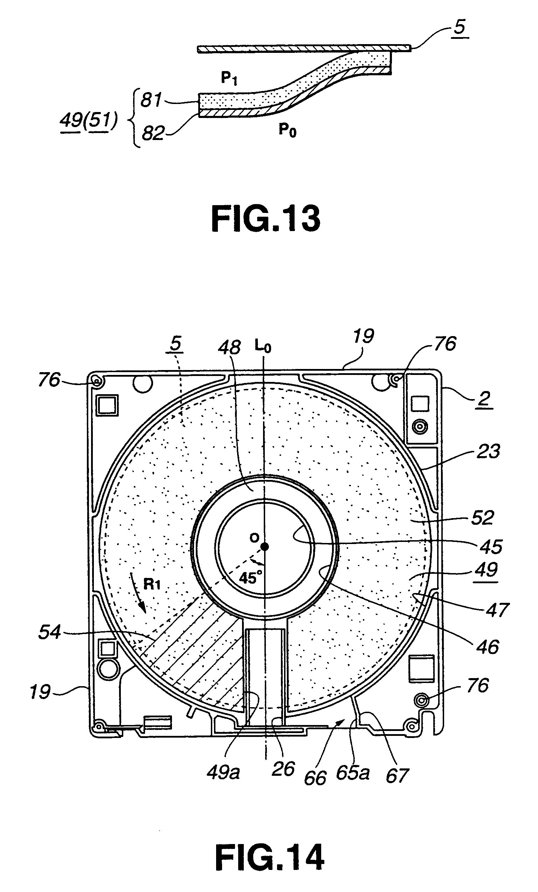

By providing the non-air-permeable layer 82 on one surface of the liner 49 (51) and by arranging the liner 49 (51) so that the non-air-permeable layer 82 faces the upper and lower cartridge halves 2, 3, the air flowing into the space between the inner surface of the lower cartridge half 3 and the non-adhesive portion 55 of the liner 51 on the lower cartridge half 3 is interrupted by the non-adhesive portion 55. The result is that the difference between the pressure P0 between the inner surface of the lower cartridge half 3 and the non-adhesive portion 55 of the liner 51 and the pressure P1 between the liner 51 and the magnetic disc 5 is sufficiently increased. By this pressure differential, the non-adhesive portion 55 is flexed into contact with the rotationally driven magnetic disc 5, as shown in Fig.13, to effect reliable cleaning of the magnetic disc 5.

In the liners 49, 51, the non-air-permeable layer 82 is provided on the entire surface of one of the surfaces of the main liner member 81, the non-air-permeable layer 82 may be provided in only an area of the non-adhesive portion 55.

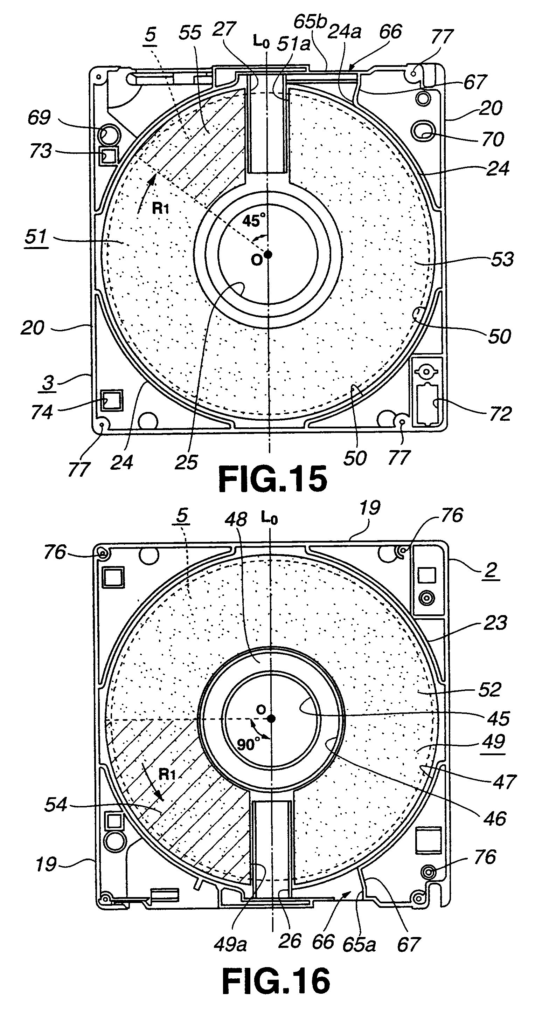

The approximately 180° portion of the liner 49 (51) with respect to the centerline L0 bisecting the first and second recording/reproducing apertures 26, 27, from which the rotationally driven magnetic disc 5 is intruded to the magnetic head, is designed as the non-adhesive portion 54 (55). It suffices if the non-adhesive portions 54, 55 become flexed only to the extent these portions 54, 55 are contacted with the magnetic disc 5 rotationally driven in the main cartridge body unit 4. Thus, it is sufficient if the non-adhesive portions 54, 55 are formed in an area of approximately 45° of the liner 49 (51) with respect to the centerline L0 bisecting the first and second recording/reproducing apertures 26, 27, from which the rotationally driven magnetic disc 5 is intruded to the magnetic head as shown in Figs.14 and 15.

Since the liner 49 provided on the upper cartridge half 2 is flexed into contact with the magnetic disc 5 by its own weight, the non-adhesive portion 54 is desirably formed over an angular extent larger than that of the liner 51 of the lower cartridge half 3. If the angular extent of the non-adhesive portion 55 on the lower cartridge half 3 is 45°, the non-adhesive portion 54 of the upper cartridge half 2 is formed over an extent of approximately 90° with respect to the centerline L0 from which the rotationally driven magnetic disc 5 is intruded to the magnetic head facing the first and second recording/reproducing apertures 26, 27, as shown in Fig. 16.

The liner 49 (51) provided with the non-air-permeable layer 82 , used in the disc cartridge 1 housing the magnetic disc 5 rotationally driven at the rotational speed of 3000 rpm or higher, is preferably of a stiffness of 0.59 g/m² to 4.6 g/m² taking into account the pressure generated by the air intruded into the main cartridge body unit 4.

Although the above-described disc cartridge 1 is provided with the air exhaust opening 65 for exhausting the air in the main cartridge body unit 1, this air exhaust opening 65 may be omitted, if so desired.

In a disc-shaped recording medium in which the center core 8 is not fitted in the center opening 7 of the main disc member 6, as in the above-described magnetic disc 5, the center opening formed in the center of the main disc member and the rim portion of the center opening operate as clamping portions for the disc rotating driving unit.

It is also possible to provide a bend at or near a boundary between the adhesive portions 52, 53 and the non-adhesive portions 54, 55 with respect to the upper and lower cartridge halves 2, 3 of the liners 49, 51 arranged on the inner surfaces of the upper and lower cartridge halves 2, 3. This bend is formed by linearly compressing portions of the non-woven cloths of the liners 49, 51 across the inner and outer rims. By providing the bends, the non-adhesive portions 54, 55 can be flexed towards the magnetic disc 5. Also, the bends, formed by compressing portions of the liners 49, 51, are improved in toughness by the non-adhesive portions 54, 55, so that the non-adhesive portions 54, 55 can be easily flexed with the bends as the center. By providing the bends, the non-adhesive portions 54, 55 can be approached to the magnetic disc 5 and also can be easily flexed and deformed, so that, if the magnetic disc 5 is run in rotation, the non-adhesive portions 54, 55 can be reliably contacted with the magnetic disc 5 to achieve reliable cleaning of the magnetic disc 5.

A modification of the disc cartridge according to the present invention is hereinafter explained by referring to the drawings.

Since this disc cartridge 101 has the basic structure in common with the above-described disc cartridge 1, the common portions are depicted by common reference numerals and are not explained specifically.

Similarly to the above-described disc cartridge 1, the disc cartridge 101 has a main cartridge body unit 104, obtained on abutting and connecting upper and lower cartridge halves 102, 103, obtained on injection molding the synthetic resin to a substantially rectangular shape, to each other. Within the main cartridge body unit 104, there is housed a magnetic disc 5 as a recording medium for information signals.

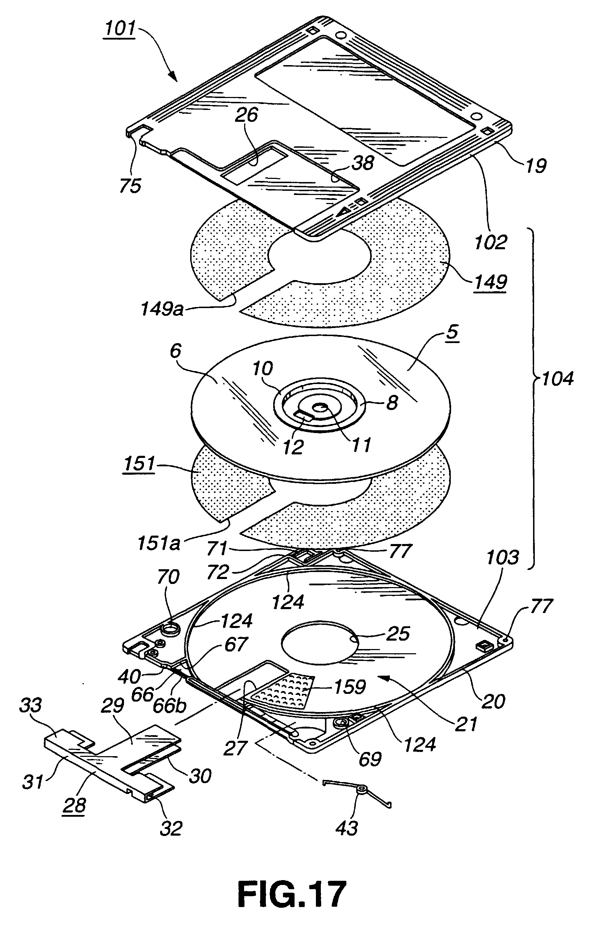

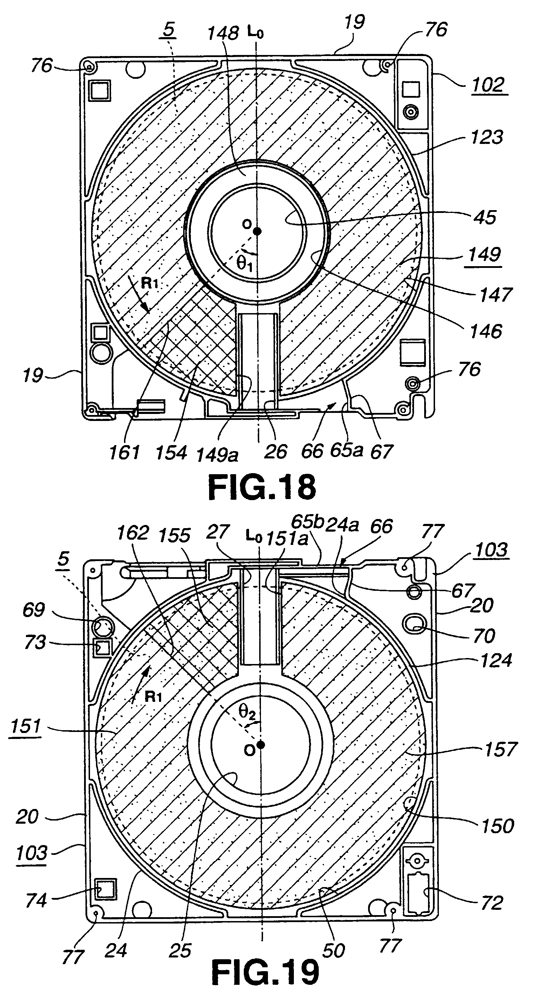

On the inner surface of the upper cartridge half 102, constituting the main cartridge body unit 104, there is protuberantly formed a ring-like rib 148 encircling the annular recess 146 and which constitutes a liner mounting portion 147 along with the housing forming wall section 122. Within the liner mounting portion 147 is arranged a liner 149 for cleaning the magnetic disc 5 housed in the main cartridge body unit 104 and for protecting the magnetic disc 5, as shown in Fig.18. This liner 149 is formed as a ring to overlie the major surface of the main disc member 6 constituting the magnetic disc 5. The portion of the liner 149 in register with the first recording/reproducing aperture 26 is formed with a cut-out 149a for opening the aperture 26, as shown in Figs.17 and 18.

The area of the lower cartridge half 103 surrounded by the partitioning wall forming wall section 124 of the lower cartridge half 103 is a liner arranging portion 150 formed to a planar surface. Within the liner arranging portion 150 is arranged the liner 151 adapted for cleaning the magnetic disc 5 housed within the main cartridge body unit 104 and for protecting the magnetic disc 5. This liner 151 is formed as a ring to overlie the major surface of the main disc member 6 constituting the magnetic disc 5. The portion of the liner 151 in register with the first recording/reproducing aperture 27 is formed with a cut-out 151a for opening the aperture 27, as shown in Figs.17 and 19.

The liners 149, 151, arranged on the facing inner surfaces of the upper and lower cartridge halves 102, 103, are formed in portions thereof registering with the first and second recording/reproducing apertures 126, 127 with cut-outs 149a, 151a, the opposite sides of which are designed as free ends.

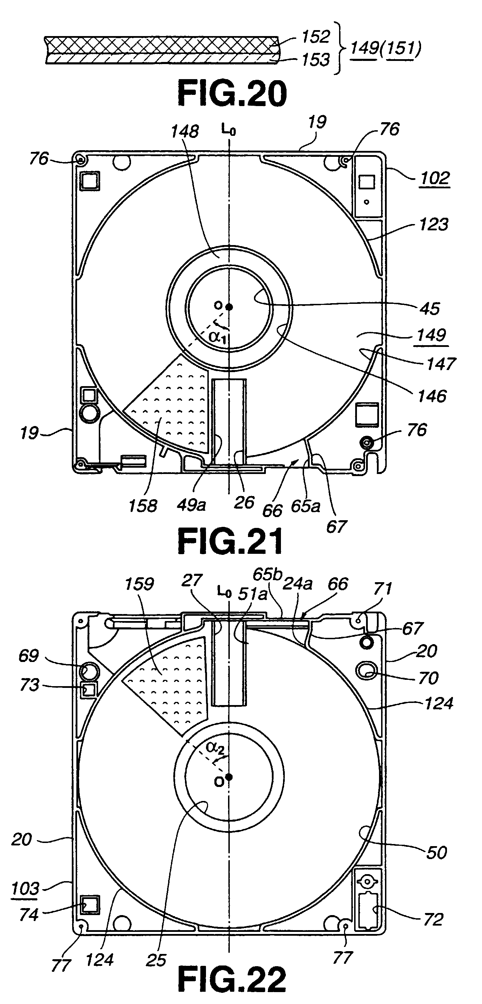

The liners 149, 151 are each constructed by layering a thermal adhesive layer 153 on one surface of an air-permeable main liner member 152 of a non-woven fabric mainly composed of fibers, such as cellulose, e.g., rayon (trade name), as shown in Fig.20. The thermal adhesive layer 153 is used for breaking air communication of the air-permeable main liner member 152 and for bonding the liners 149, 151 to the inner surfaces of the upper and lower cartridge halves 102, 103. The thermal adhesive layer 153 is formed by coating the surface of the main liner member 152 with a high molecular material such as ethylene vinyl acetate or polyethylene terephthalate (PET) exhibiting thermal bonding properties. The thermal adhesive layer 153 also is constructed by bonding a film of polyethylene terephthalate (PET) exhibiting thermal bonding characteristics to a surface side of the main liner member 152.

For preventing thermal damage to the main liner member 152, adapted to be contacted with the magnetic disc 5 to protect the magnetic disc 5, when bonding the liners 149, 151 to the upper and lower cartridge halves 102, 103, the high molecular material exhibiting thermal bonding characteristics, constituting the thermal adhesive layer 153, is preferably such a material which is cured at a temperature lower than the melting point of the material of the main liner member 152 and which is bonded in this state to the upper and lower cartridge halves 102, 103.

The liners 149, 151 are bonded to the facing inner surfaces of the upper and lower cartridge halves 102, 103, with the thermal adhesive layers 153 as the bonding surfaces, as shown in Figs.18 and 19.

The liners 149, 151 are bonded to the inner surfaces of the upper and lower cartridge halves 102, 103 in such a state in which, when the main cartridge body unit 104 is divided along a centerline L0 bisecting the first and second recording/reproducing apertures 26, 27, provided in the upper and lower cartridge halves 102, 103, through the center O of the main cartridge body unit 104, the portions of the liners 149, 151 lying in an upstream side area of the magnetic disc 5 rotating in the direction indicated by arrow R1 in Figs.18 and 19 towards the first and second recording/reproducing apertures 26, 27 operate as non-adhesive portions 154, 155, while the portions of the liners 149, 151 lying in the downstream side area of the main cartridge body unit 104, with the magnetic disc 5 retreating from the apertures 26, 27, operate as adhesive portions 156, 157.

The non-adhesive portions 154, 155 are separated from the inner surfaces of the upper and lower cartridge halves 102, 103 and flexurally deformed into contact with the major surface of the magnetic disc 5 rotationally driven in the main cartridge body unit 104 to clean the magnetic disc 5. The non-adhesive portions 154, 155 are of a length such that, when at least the magnetic disc 5 is run in rotation, the non-adhesive portions 154, 155 are separated from the inner surfaces of the upper and lower cartridge halves 102, 103 and flexurally deformed into contact with the major surface of the rotationally driven magnetic disc 5.

If the liners 149, 151 used are such that the main liner member 152 is constructed by a non-woven cloth mainly composed of fibers, such as cellulose, e.g., rayon (trade name), and the thermal adhesive layer 153 is formed of ethylene vinyl acetate, the non-adhesive portions 154, 155 are provided over angular ranges of θ1 and θ2 equal to approximately 40° to 45°, respectively, in the upstream side of the centerline L0 bisecting the first and second recording/reproducing apertures 26, 27 through the centerline O of the main cartridge body unit 104, into which the rotationally driven magnetic head 5 facing the first and second recording/reproducing apertures 26, 27 is about to be intruded from the upstream side, as shown in Figs.18, 19.

The ranges of the non-adhesive portions 154, 155 may be suitably selected depending on the stiffness of the liners 149, 151 employed, however, if these ranges are set in excess of 180° from the centerline L0 bisecting the first and second recording/reproducing apertures 26, 27, there is the risk that the non-adhesive portions 154, 155 be not maintained in stability at a fixed position. Therefore, the above ranges are set to 180° or less and preferably to 100° or less.

The portions other than the non-adhesive portions 154, 155 of the liners 149, 151 are designed as adhesive portions 156, 157 to the inner surfaces of the upper and lower cartridge halves 102, 103, as shown in Figs.18 and 19.

The inner surfaces of the upper and lower cartridge halves 102, 103, carrying the liners 149, 151, have portions faced by the non-adhesive portions 154, 155, these portions being formed with rough surfaces 158, 159, as shown in Figs.21 and 22. These rough surfaces 158, 159 are provided for preventing occurrence of such status in which the load of, for example, the magnetic disc 5, is applied to the liners 149, 151 having the thermal adhesive layer 153 on the sides thereof facing the inner surfaces of the upper and lower cartridge halves 102, 103 to cause the non-adhesive portions 154, 155 to be affixed to the inner surfaces of the upper and lower cartridge halves 102, 103 to inhibit separation of the non-adhesive portions 154, 155 from the inner surfaces of the upper and lower cross-sectional halves 102, 103. That is, the function of the rough surfaces 158, 159 is to prevent the affixture of the non-adhesive portions 154, 155 to the inner surfaces of the upper and lower cross-sectional halves 102, 103.

Thus, the rough surfaces 158, 159 are provided substantially in register with the portions of the liners 149, 151 carrying the non-adhesive portions 154, 155 and hence are provided in the angular ranges α1 and α2 of approximately 40 to 45° on the upstream side of the centerline L0 bisecting the first and second recording/reproducing apertures 26, 27, through the centerline O of the main cartridge body unit 104, into which the rotating magnetic disc 5 is intruded into the magnetic head facing the apertures 26, 27.

Meanwhile, since the rough surfaces 158, 159 are formed in register with the non-adhesive portions 154, 155, these rough surfaces 158, 159, similarly to the non-adhesive portions 154, 155, are formed through an angular extent of 180° or less, desirably 100° or less, from the centerline L0 bisecting the first and second recording/reproducing apertures 26, 27.

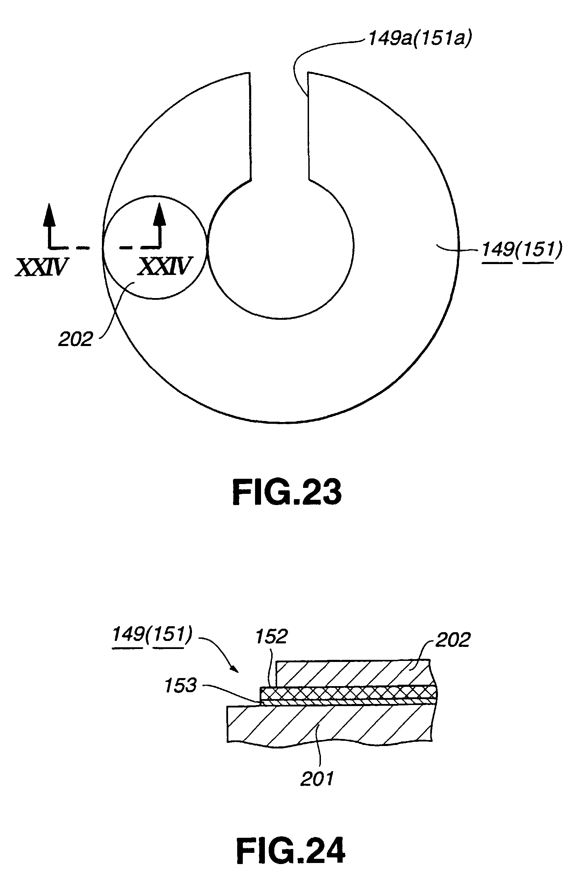

The main liner member 152 is constructed by a non-woven cloth, mainly composed of fibers, such as cellulose, e.g., rayon (trade name) and the thermal adhesive layer 153 is formed by ethylene vinyl acetate, to provide the liner 149 (151). The liners 149, 151 are set on plural test plates 201 having different surface roughnesses (Rz), as shown in Figs.23 and 24. On the liners 149, 151 were set weights of approximately 3 g, which is twice the weight of the center core 8 mounted on the 3.5 inch magnetic disc 5. After storage of the resulting sets for one week under an environment of high temperature of 60°C and high humidity of 90%, the temperature was restored to ambient temperature, and the ends of the liners 149, 151 were lifted to visually check the state of bonding of the liners 149, 151 to the plate 201.

At this time, the liners 149, 151 were set with the thermal adhesive layer 153 facing the surface of the plate 201. The plate 201 is formed of an ABS resin similar to the material of the upper and lower cartridge halves 102, 103.

The result is that, when the liners 149, 151 were set on the plate 201 having a mirror surface, traces of adhesion were observed, and that, when the liners 149, 151 were set on the plate with the surface roughness of 3 to 4 µmRz, only slight traces of adhesion were observed.

No traces of adhesion were observed when the liners 149, 151 were set on the plate 201 having surface roughnesses of 8 to 10 µmRz, 12 to 15 µmRz and 17 to 19 µmRz, respectively.

If the plate 201 with the surface roughness exceeding 20 µmRz was formed by molding an ABS resin, there occurred molding defects such as large protrusions ascribable to irregular release from a molding metal die.

In light of the above, the mean surface roughness of the roughed surfaces 158, 159, provided for preventing adhesion of the non-adhesive portions 154, 155 to the inner surfaces of the upper and lower cartridge halves 102, 103 to obstruct separation thereof from the inner surfaces of the upper and lower cartridge halves 102, 103, is set to 5 to 20 µmRz.

There are provided bends 161, 162 at or near a boundary between the adhesive portions 156, 157 and the non-adhesive portions 54, 55 to the upper and lower cartridge halves 102, 103 of the liners 149, 151 arranged on the inner surfaces of the upper and lower cartridge halves 102, 103, as shown in Figs.18 and 19. These bends are formed by linearly compressing portions of the main liner member 152 of non-woven cloths constituting the liners 149, 151 across the inner and outer rims.

These bends 161, 162 are provided in register with planar portions, other than the roughed portions 158, 159, of the inner surfaces of the upper and lower cartridge halves 102, 103. Since the bends 161, 162 are provided on the planar portions of the upper and lower cartridge halves 102, 103, the bends 161, 162 are bonded to the upper and lower cartridge halves 102, 103, so that the boundary between the adhesive portions 156, 157 and the non-adhesive portions 154, 155 can be demarcated clearly. Since the bends 161, 162, obtained on compressing portions of the main liner member 152, are improved in toughness by the non-adhesive portions 154, 155, the non-adhesive portions 154, 155 can be flexed with the bends 161, 162 as the center.

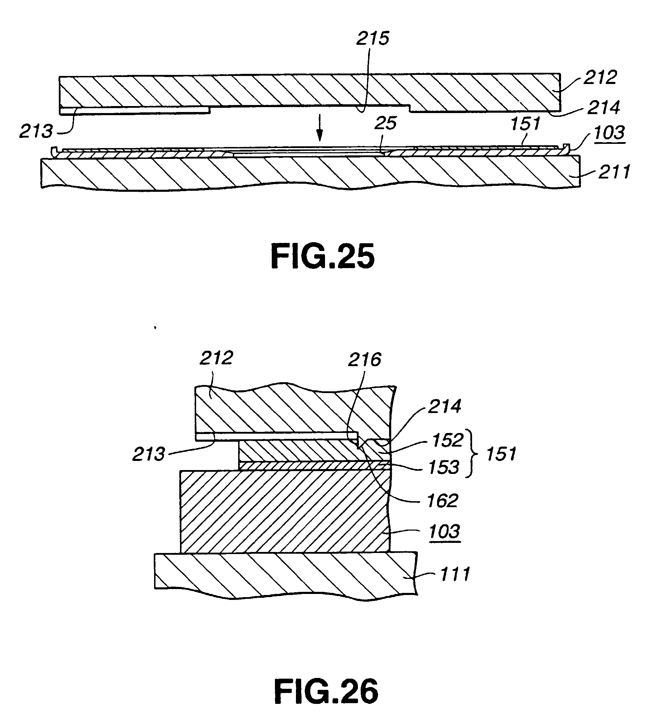

The liners 149, 151, provided with the adhesive portions 156, 157, the non-adhesive portions 154, 155 and with the bends 161, 162 at the boundary between the adhesive portions 156, 157 and the non-adhesive portions 154, 155, and which are arranged on the inner surfaces of the upper and lower cartridge halves 102, 103, are bonded to the inner surfaces of the upper and lower cartridge halves 102, 103, using a thermal welding device, employing ultrasonic waves, as shown in Figs.25 and 26.

The state in which the liner 151 is bonded to the lower cartridge half 103 is specifically explained. In mounting the liner 151 on the lower cartridge half 103, the lower cartridge half 103 is set on a welding table 211 of a thermal welding device, with the inner surface thereof facing upwards, as shown in Figs.25 and 26. The ring-shaped liner 151 is set in position on the inner surface of the lower cartridge half 103 for encircling the center opening 25. On the liner 151 is applied a thermal welding hone 212 of the thermal welding device and the thermal adhesive layer 153 provided on the liner 151 is fused by ultrasonic waves and bonded to the inner surface of the lower cartridge half 103 to mount the liner 151 on the inner surface of the lower cartridge half 103.

The thermal welding hone 212 used is sized substantially to the outer shape of the liner 151. The portion of the thermal welding hone 212 in register with the non-adhesive portion 155 is formed with a cut-out step 213 to prevent the thermal welding hone 212 from contacting with the non-adhesive portion 155 on contacting an ultrasonic wave applying contact surface 214 with the adhesive portion 157.

At a mid portion of the thermal welding hone 212 is formed a recess 215 for clearing the center opening 25.

On the end face side of the thermal welding hone 212 is formed a lug 216 for forming the bend 162 in the boundary between the cut-out step 213 in register with the non-adhesive portion 155 and the contact surface 214.

If the thermal welding hone 212, designed as described above, is abutted against the liner 151 placed on the inner surface of the lower cartridge half 103, as shown in Fig.26, and the ultrasonic wave is applied, only the portion of the thermal adhesive layer 153 contacting with the contact surface is fused and bonded to the inner surface of the lower cartridge half 103 to produce the adhesive portion 157. On the other hand, the ultrasonic wave is not applied to the portion of the thermal adhesive layer 153 in register with the cut-out step 213 so that this portion is left as the non-adhesive portion 155 not bonded to the inner surface of the lower cartridge half 103. The lug 216 provided on the thermal welding hone 212 is abutted against the liner 151 with a force stronger than that with which the remaining portion of the thermal welding hone 212 is abutted against the liner 151. Thus, the portion of the main liner member 152 onto which the lug 216 is pressed is compressed and thermally deformed to produce the bend 162.

By using the thermal welding hone 212 as described above, it is possible to provide the non-adhesive portion 155 and the adhesive portion 157 and to form the bends 162 simultaneously to mount the liner 151 on the lower cartridge half 103.

Meanwhile, the disc cartridge 101, shown here, is provided with the air exhaust opening 65 for exhausting the air in the disc housing section 21, as a space encircled by the partitioning wall section 22, to outside of the main cartridge body unit 4, and an air exhaust passage 66 communicating with the air exhaust opening 65. The air exhaust opening 65 is formed by partially segmenting the front wall section 15 of the main cartridge body unit 104, as in the case of the disc cartridge 1, described above, in such a position that, when the shutter member 28 is at the position of closing the first and second recording/reproducing apertures 26, 27, the air exhaust opening 65 is covered by a portion of the shutter member 28 and, when the shutter member 28 is moved to a position opening the first and second recording/reproducing apertures 26, 27, the air exhaust opening 65 is opened.

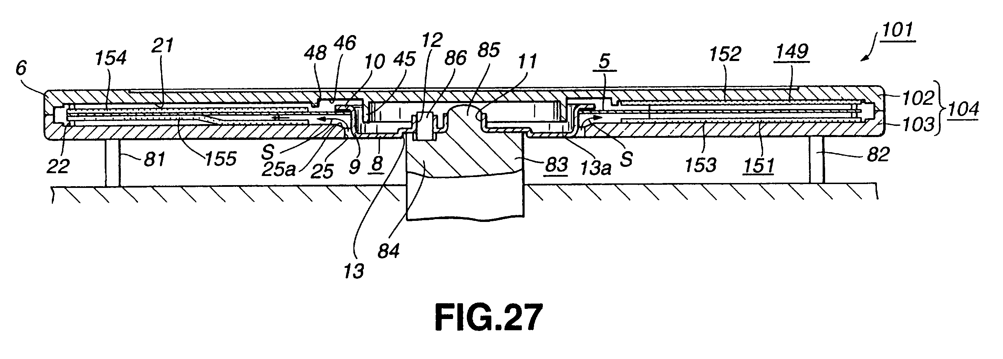

Similarly to the above-described disc cartridge, the present disc cartridge 101, loaded on the disc recording/reproducing apparatus, employing the disc cartridge 101 as a recording medium, is positioned in the horizontal direction, with the first and second positioning reference holes 69, 70 engaged by the positioning pins 81, 82 provided on the disc recording and/or reproducing apparatus, while the disc cartridge 101 is also positioned in the loading height position by having the corners on the rear wall section 16 of the main cartridge body unit 104 being supported by height-setting pins, not shown, in a manner shown in Fig.27.

When the disc cartridge 101 is loaded on the disc recording/reproducing apparatus, the center core 8 facing the center opening 25 formed in the lower surface of the main cartridge body unit 4 is set on the disc table 84 constituting the disc rotating driving unit 83 provided on the disc recording/reproducing apparatus, while the spindle shaft 85 of the disc rotating driving unit 83 is passed through the spindle shaft inserting opening 11 and the driving pin 86 is passed through the driving pin engagement opening 12. At this time, the center core 8 is set on the disc table 84 in such a manner that the disc setting portion 13 provided on the bottom 9a of the swollen-out portion 9 has a fit on the disc table 84, while being attracted by a magnet, not shown, provided on the disc table 84, such that the magnetic disc 5 can be rotated in unison with a magnet, not shown, provided on the disc table 84. Since the magnetic disc 5 is set on the disc table 84 via recessed disc setting portion 13 provided on the center core 8, the spindle shaft 85 can be easily passed through the spindle shaft inserting opening 11 as the loading position deviation with respect to the disc table 84 is inhibited. In addition, the loading position of the magnetic disc 5 with respect to the disc table 84 can be controlled such as to cause the driving pin 86 to be passed through the driving pin engagement opening 12.

If a spindle motor, not shown, constituting the disc rotating driving unit 83 is driven, with the magnetic disc 5 being enabled to be rotated in unison with the disc table 84, the magnetic disc 5 is run in rotation, in synchronism with the rotation of the disc table 84, with the spindle shaft 85 as the center of rotation.

Meanwhile, when the disc cartridge 101 is loaded on the disc recording/reproducing apparatus, the shutter member 28 is moved against the bias of the torsion coil spring 43, by a shutter opening mechanism provided on the disc recording/reproducing apparatus, for opening the first and second recording/reproducing apertures 26, 27. This also opens the air exhaust opening 65 provided in the front wall section 15 of the main cartridge body unit 104.

Meanwhile, if the disc cartridge 101 is loaded on the disc recording/reproducing apparatus, as the disc cartridge is positioned in the horizontal direction and in the height-wise direction, the spindle shaft 85 is passed through the spindle shaft inserting opening 11, the driving pin 86 is engaged in the driving pin engagement opening 12 and the magnetic disc 5 is set on the disc table 84, as the magnetic disc is enabled to be rotated in unison with the disc table 84, the magnetic disc 5 is floated from the lower cartridge half 103 constituting the lower cartridge half 103 of the main cartridge body unit 104, and is positioned at a mid portion along the direction of thickness of the main cartridge body unit 104.

At this time, the non-adhesive portion 154 of the liner 149, provided on the upper cartridge half 102, is flexed under its own weight towards the lower cartridge half 103, along the bend 161, until it is contacted with the major surface of the magnetic disc 5 positioned at a mid portion along the direction of thickness of the main cartridge body unit 104.

If the magnetic disc 5, loaded in position on the disc rotating driving unit 83, is run in rotation at an rpm exceeding at least 3000, for example, at an rpm between 3000 and 3600, there is generated an air stream in the disc housing section 21 flowing spirally along the direction of rotation of the magnetic disc 5. This air stream is a spiral stream flowing from the center towards the outer rim of the main cartridge body unit 4, and operates for sucking air in the direction indicated by arrow S in Fig.27 from the center opening 25 provided in the lower surface of the main cartridge body unit 104. If air is sucked from the center opening 25, there is generated a spiral air stream which pressurizes the area between the magnetic disc 5 and the lower cartridge half 103 constituting the lower surface of the main cartridge body unit 104.

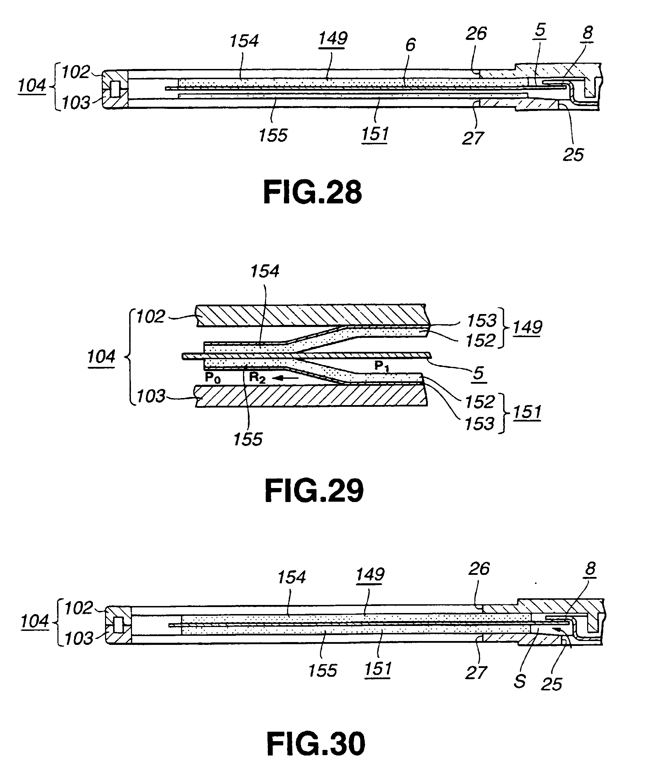

When the magnetic disc 5 is run in rotation, the air sucked from the center opening 25 provided in the main cartridge body unit 104 flows into a space between the inner surface of the lower cartridge half 103 and the non-adhesive portion 154 of the liner 151 provided on the lower cartridge half 103. Since the non-air-permeable thermal adhesive layer 153 is provided on the surface of the non-adhesive portions 155 facing the inner surface of the lower cartridge half 103, the air flowing into the space between the inner surface of the lower cartridge half 103 and the non-adhesive portion 155 of the liner 151 is prohibited from flowing through the liner 151 to flow into the space between the liner 151 and the magnetic disc 5. Since the air flow through the liner 151 is prohibited, there is produced a spiral air stream R2 between the inner surface of the lower cartridge half 103 and the non-adhesive portion 155 of the liner 151, thus increasing the pressure P0 between the inner surface of the lower cartridge half 103 and the non-adhesive portion 155 of the liner 151 to a value larger than the pressure P1 between the liner 151 and the magnetic disc 5. This pressure differential flexes and deforms the non-adhesive portion 155 into contact with the opposite major surface of the magnetic disc 5, as shown in Figs.29 and 30.

By the floating of the non-adhesive portion 155 of the liner 151, arranged on the lower cartridge half 103, the pressure P1 between the liner 151 of the lower cartridge half 103 and the magnetic disc 5 is increased such that the magnetic disc 5 is rotated as it is subjected to a pressure which causes the magnetic disc to be floated towards the upper cartridge half 102. On the other hand, the non-adhesive portion 154 of the liner 149, arranged on the upper cartridge half 102, is flexed and deformed towards the magnetic disc 5, under its own weight, as shown in Figs.29 and 30, so that the non-adhesive portion 154 is contacted with the magnetic disc 5 rotated under a force floating the disc towards the upper cartridge half 102.

Thus, with the disc cartridge 101 according to the present invention, the liners 149, 151 are partially contacted with both major surfaces of the magnetic disc 5, when the magnetic disc 5 is run in rotation. Thus, the magnetic disc can be cleaned. Since the liners 149, 151 are not contacted with the magnetic disc 5 using pressurizing means, such as a lifter, required in the conventional disc cartridge, there is no risk of the liners 149, 151 pressing the magnetic disc to obstruct its rotation, while there is no risk of the liners grazing the magnetic disc 5.

The air sucked into the main cartridge body unit 104 is entrained by the rotating magnetic disc 5 so as to be discharged via the air exhaust opening 65. At this time, any dust and dirt produced from the magnetic disc cleaned by the liners 149, 151 are also exhausted via the air exhaust opening 65 along with the air stream and are prevented from being left in the main cartridge body unit 104. Thus, the magnetic disc or the magnetic head can be reliably prevented from being damaged.

In the above-described disc cartridges 1, 101, the air exhaust opening 65 is provided for exhausting air from the inside of the main cartridge body unit 4, 104. However, the air exhaust opening 65 may be omitted, if so desired.

On the other hand, in a disc-shaped recording medium in which, contrary to the above-described magnetic disc 5, the center core 8 is not provided in the center opening 7 of the main disc member 6, a center opening provided in the main disc member and the rim of this center opening are used as clamping portions for the disc rotating driving unit.

In the above-described embodiments, the magnetic disc 5 is housed in the disc cartridge 1 or 101. However, the present invention is applicable not only to a disc cartridge housing a flexible disc, but to a disc cartridge housing a disc-shaped recording medium employing a rigid disc substrate, such as an optical disc or a magneto-optical disc, to realize the operation and meritorious effect similar to those achieved with the illustrated disc cartridge.

### Industrial Applicability

In the disc cartridge according to the present invention, since a portion of a liner arranged within the main cartridge body unit is flexed and deformed into contact with the disc-shaped recording medium run in rotation within the main cartridge body unit, the disc can be cleaned without applying large load on the rotationally driven disc-shaped recording medium.

Since no large load is applied to the rotating disc-shaped recording medium, stable rotational driving of the disc-shaped recording medium is assured, while the relative positions of the recording/reproducing means responsible for recording/reproduction and the disc-shaped recording medium can be maintained constant to enable recording/reproduction of information signals with optimum recording/reproducing characteristics.

## Claims

1. A disc cartridge comprising:
a disc-shaped recording medium provided with a clamp at a center portion thereof for clamping the disc-shaped recording medium to a rotating driving unit;
a main cartridge body unit made up of upper and lower cartridge halves for rotationally housing said disc-shaped recording medium, said main cartridge body unit having a recording/reproducing aperture in at least is lower surface thereof for exposing at least a portion of a signal recording region of said disc-shaped recording medium to outside along the radial direction, said main cartridge body unit also having, at the center in the lower surface thereof, a center opening for exposing said clamp mounted on said disc-shaped recording medium to outside; and
a liner provided on each of opposite inner surfaces of said main cartridge body unit;
said liner having an adhesive portion and a non-adhesive portion for said main cartridge body unit, there being provided a non-air-permeable layer on a surface of said non-adhesive portion facing the inner surface of said main cartridge body unit.

2. The disc cartridge according to claim 1 wherein said non-adhesive portion of the liner is provided in an upstream side region with respect to said recording/reproducing aperture looking along the direction of rotation of said disc-shaped recording medium rotating within said main cartridge body unit towards said recording/reproducing aperture.

3. The disc cartridge according to claim 1 wherein said liner is made up of an air-permeable main liner member and a non-air-permeable layer provided on the entire surface of said main liner member facing the inner surface of said main cartridge body unit.

4. The disc cartridge according to claim 3 wherein said non-air-permeable layer is a high molecular material coated on the surface of said main liner member facing the inner surface of said main cartridge body unit.

5. The disc cartridge according to claim 4 wherein said high molecular material exhibits thermal adhesive characteristics and is bonded to the inner surface of said main cartridge body unit.

6. The disc cartridge according to claim 3 wherein said non-air-permeable layer is constructed by layering a film of a high molecular material on said main liner member.

7. The disc cartridge according to claim 1 wherein said liner is formed with a bend at or near the boundary between said adhesive portion and said non-adhesive portion.

8. A disc cartridge comprising:
a disc-shaped recording medium provided with a clamp at a center portion thereof for clamping the disc-shaped recording medium to a rotating driving unit;
a main cartridge body unit made up of upper and lower cartridge halves for rotationally housing said disc-shaped recording medium, said main cartridge body unit having a recording/reproducing aperture in at least the lower surface thereof for exposing at least a portion of a signal recording region of said disc-shaped recording medium to outside along the radial direction of said disc-shaped recording medium, said main cartridge body unit also having, at a center portion in the lower surface thereof, a center opening for exposing said clamp mounted on said disc-shaped recording medium to outside; and
a liner having a non-air-permeable thermal adhesive layer on one surface thereof, said liner being provided on each of the opposite inner surfaces of said main cartridge body unit for sandwiching said disc-shaped recording medium in-between;
said liner having an adhesive portion comprised of said thermal adhesive layer bonded to the inner surface of said main cartridge body unit and a non-adhesive portion that can be separated from the inner surface of said main cartridge body unit, at least a portion of the inner surface of said main cartridge body unit facing said non-adhesive portion being a roughed surface.

9. The disc cartridge according to claim 8 wherein said rough surface formed on the inner surface of said main cartridge body unit has a mean roughness of 5 to 20 µmRz.

10. The disc cartridge according to claim 8 wherein said non-adhesive portion of said liner is provided in an upstream side region with respect to said recording/reproducing aperture looking along the direction of rotation of said disc-shaped recording medium rotating within said main cartridge body unit towards said recording/reproducing aperture.

11. The disc cartridge according to claim 10 wherein said rough surface formed on the inner surface of said main cartridge body unit is formed over a range of 100° or less from the centerline of said main cartridge body unit bisecting the recording/reproducing aperture.

12. The disc cartridge according to claim 8 wherein said liner is formed with a bend facing the planar portion of said main cartridge body unit at or near the boundary between said adhesive portion and said non-adhesive portion.

13. The disc cartridge according to claim 12 wherein said bend is formed by being pressed by a lug provided on a thermal welding hone used for bonding said liner to the inner surface of said main cartridge body unit.
